# EUROPEAN PATENT APPLICATION

(11) **EP 4 372 658 A1**
(43) Date of publication of application: **22.05.2024**
(21) Application number: 22844908.8
(22) Date of filing: 22.04.2022
(51) Int. Cl.: G06Q 40/08

(54) **VEHICLE ACCIDENT LOSS ASSESSMENT METHOD AND APPARATUS**

(30) Priority: 23.07.2021 CN 202110836463
(71) Applicant: Data Enlighten Technology (Beijing) Co., Ltd, Chaoyang District Beijing 100025 (CN)
(72) Inventor: ZHOU, Kai, Beijing 100025 (CN); ZHANG, Rongbing, Beijing 100025 (CN); LIAO, Mingrui, Beijing 100025 (CN); WANG, Minhao, Beijing 100025 (CN); JIA, Yunwei, Beijing 100025 (CN)
(74) Representative: Grünecker Patent- und Rechtsanwälte PartG mbB
(86) International application number: PCT/CN2022/088381
(87) International publication number: WO 2023/000737

(57) **Abstract**

Provided is a vehicle accident loss assessment method and apparatus. The method includes: acquiring vehicle information of a vehicle and repair shop information (S1 10); virtualizing the vehicle into a corresponding graph in a three-dimensional coordinate system according to the vehicle information, determining a location of a collision portion of the vehicle based on the graph, and determining an accident type (S120); determining a core part involved in the collision portion and a damage form of the core part (S130) according to the vehicle information, the location of the collision portion in the three-dimensional coordinate system, and the accident type; calculating correlated damaged parts according to the core parts involved in the collision portion and the damage forms of the core parts, so as to obtain a list of damaged parts (S140); and generating a loss report by the list of damaged parts in combination with the repair shop information, wherein the loss report includes a loss assessment value (S150).

## Description

### TECHNICAL FIELD

The present invention relates to automobile information technology and automobile loss assessment technology, and more particularly to a vehicle accident loss assessment method and apparatus.

### BACKGROUND

In application fields related to vehicle loss determination, such as insurance claims, insurance assessment, traffic accident loss assessment, and vehicle maintenance, how to improve work efficiency, reduce labor costs, improve service levels, and win customer satisfaction through internet technology, IT technology, and/or artificial intelligence technology has become an urgent demand shared by the industry and market. In the process of assessing traffic accident losses, due to factors such as site, equipment, and/or time urgency, it is necessary to conduct a rapid assessment of vehicles with severe losses without dismantling and inspection. In the process of insurance claims and loss assessment, for vehicles with severe losses, it is first necessary to evaluate whether the vehicle has maintenance value, and also necessary to conduct a rapid assessment without dismantling and inspection, so as to determine whether the loss is assessed by normal maintenance or by presumed total loss.

At present, the pain points for insurance companies in assessing the loss of vehicles with severe losses are:
firstly, the time period for assessing the loss by dismantling inspection is long;
secondly, assessing the loss by dismantling inspection is generally carried out in the maintenance enterprise, and even if the insurance company ultimately determines to assess the loss by presumed total loss and conduct a residual value auction of the vehicle, it is obstructed by the maintenance enterprise in every way; and
thirdly, unnecessary vehicle dismantling and inspection costs are increased.

For accident vehicles with severe losses and loss assessment by normal maintenance, the number of parts loss items is mostly in the tens or even hundreds. Manually creating a loss assessment sheet itself is a time-consuming task, and it often takes more than one hour. Rapid assessment, minor correction, and completing the creation of a loss assessment sheet in a few minutes will undoubtedly greatly improve work efficiency and reduce labor costs.

### SUMMARY OF THE INVENTION

The present invention innovatively provides a vehicle accident loss assessment method and apparatus, which breaks through the traditional operation mode and concept of loss assessment, models the damage form of a vehicle collision, mines and analyzes a large amount of historical data, and realizes a correlation algorithm between the vehicle collision damage models and loss details.

To achieve the above technical objectives, in one aspect, the present invention discloses a vehicle accident loss assessment method. The vehicle accident loss assessment method includes: acquiring vehicle information of a vehicle and repair shop information; virtualizing the vehicle into a corresponding graph in a three-dimensional coordinate system according to the vehicle information, determining a location of a collision portion of the vehicle based on the graph, and determining an accident type; determining core parts involved in the collision portion and a damage forms of the core parts according to the vehicle information, the location of the collision portion in the three-dimensional coordinate system, and the accident type; calculating correlated damaged parts according to the core parts involved in the collision portion and the damage forms of the core parts, so as to obtain a list of damaged parts; and generating a loss report by the list of damaged parts in combination with the repair shop information, wherein the loss report includes a loss assessment value.

Further, for the vehicle accident loss assessment method, the vehicle information includes vehicle brand and configuration vehicle model information.

Further, for the vehicle accident loss assessment method, calculating correlated damaged parts includes: determining a collision damage type according to the core parts involved in the collision portion and the damage forms of the core parts; selecting a corresponding correlation density model according to the determined collision damage type; and calculating the correlated damaged parts by using the selected correlation density model.

Further, for the vehicle accident loss assessment method, the collision damage type has a first correspondence with the core parts and the damage forms of the core parts, the collision damage type has a second correspondence with the correlation density model, and a generation process of the first correspondence and the second correspondence includes: collecting historical case data and classifying vehicle models according to the vehicle information in the historical case data; virtualizing each car in a historical case into a corresponding graph in a three-dimensional coordinate system, and determining a location of a collision portion of the vehicle based on the graph; determining a name of a car collision portion, a height of the car collision on a car body, and a damage degree of the car collision according to an installation location of each part in the three-dimensional coordinate system in vehicles with different brands and different configuration vehicle models, and according to the location of the collision portion of the vehicle and data of the damage degree of the car collision in the historical case data; classifying the collision damage type according to the car collision portion, the height of the car collision on the car body, and the damage degree of the car collision; for different collision damage types of vehicles with different car shapes, separately determining corresponding core parts and damage forms of the core parts, and saving the collision damage types in correspondence with the core parts and the damage forms of the core parts; and for different collision damage types of vehicles with different car shapes, separately establishing corresponding correlation density models, and saving the collision damage types in correspondence with the correlation density models.

Further, for the vehicle accident loss assessment method, and for different collision damage types of vehicles with different car shapes, separately determining corresponding core parts and damage forms of the core parts includes: taking a historical accident vehicle loss assessment record in the historical case data as sample data to perform a big data mining analysis, and classifying the sample data according to a loss amount; and analyzing a probability of various part damages occurring in various vehicle damage types involved in the sample data of different amount segments, so as to determine the corresponding core parts and the damage forms of the core parts.

Further, for the vehicle accident loss assessment method, and for different collision damage types of vehicles with different car shapes, separately establishing corresponding correlation density models includes: taking a historical accident vehicle loss assessment record in the historical case data as sample data to perform a big data mining analysis; and analyzing a probability of damages occurring between parts, so as to generate the correlation density models.

Further, for the vehicle accident loss assessment method, generating a loss report by the list of damaged parts in combination with the repair shop information, wherein the loss report includes a loss assessment value, includes: generating a preview loss report by the list of damaged parts in combination with the repair shop information; performing a deviation correction on a list of parts in the preview loss report; and generating the loss report according to the list of parts after the deviation correction in combination with the repair shop information, wherein the loss report includes the loss assessment value.

To achieve the above technical objectives, in another aspect, the present invention discloses a vehicle accident loss assessment apparatus. The vehicle accident loss assessment apparatus includes: an information acquisition unit, configured to acquire vehicle information of a vehicle and repair shop information; a collision location and accident type determination unit, configured to virtualize the vehicle into a corresponding graph in a three-dimensional coordinate system according to the vehicle information, determine a location of a collision portion of the vehicle based on the graph, and determine an accident type; a core part damage definition unit, configured to determine a core parts involved in the collision portion and a damage forms of the core parts, according to the vehicle information, the location of the collision portion in the three-dimensional coordinate system, and the accident type; an correlated damaged part calculation unit, configured to calculate correlated damaged parts according to the core parts involved in the collision portion and the damage forms of the core parts, so as to obtain a list of damaged parts; and a loss report generation unit, configured to generate a loss report by the list of damaged parts in combination with the repair shop information, wherein the loss report includes a loss assessment value.

To achieve the above technical objectives, in yet another aspect, the present invention discloses a computing device. The computing device includes: one or more processors, and a memory coupled to the one or more processors, the memory storing instructions that, when executed by the one or more processors, cause the one or more processors to perform the above method.

To achieve the above technical objectives, in yet another aspect, the present invention discloses a machine-readable storage medium. The machine-readable storage medium stores executable instructions that, when executed, cause the machine to perform the above method.

The beneficial effects of the present invention are:
The vehicle accident loss assessment method and device provided by embodiments of the present invention is an efficient, intelligent, and convenient vehicle loss assessment model. It breaks the limitation in the current car industry that accident vehicles with severe losses require dismantling inspection for loss assessment, and can determine the loss boundary without dismantling inspection, which is of great significance for insurance companies to develop reasonable claim plans and thereby save claim costs. It breaks the limitation in the current car industry that accident vehicles with severe losses relay too much on employee skills for loss assessment, reduces employee technical requirements, and greatly improves the efficiency of loss assessment.For on-site insurance,the rapid and accurate estimation provides a scientific guarantee for the calculation of outstanding claims reserve of insurance companies, and completely changes the past brainstorming estimation method. In the assessment of road traffic accident losses, the rapid assessment of accident vehicles has profound significance and value for the rapid handling of traffic accidents and/or accident disputes.

### BRIEF DESCRIPTION OF THE DRAWINGS

In the figures,
FIG. 1 is a flow chart of a vehicle accident loss assessment method provided by an embodiment of the present invention;
FIG. 2 is a schematic diagram of an estimate sheet provided by an example of the present invention;
FIG. 3A and FIG. 3B are an actual vehicle collision diagram of Lexus SUV and a schematic diagram of a page in which a collision portion of a vehicle is depicted by a circle and an accident type is selected, respectively as provided by Example 1 of the present invention;
FIG. 4A and FIG. 4B are an actual vehicle collision diagram of Beijing Hyundai SUV, and a schematic diagram of a page in which a collision portion of a vehicle is depicted by a circle and an accident type is selected, respectively as provided by Example 2 of the present invention;
FIG. 5A and FIG. 5B are actual vehicle collision diagrams from different perspectives of a three-box four-door vehicle of the FAW Toyota REIZ, respectively as provided by Example 3 of the present invention; FIG. 5C is a schematic diagram of a page in which a collision portion of a vehicle is depicted by a circle and an accident type is selected, as provided by Example 3 of the present invention;
FIG. 6 shows the core parts shown in Example 4 of the present invention, with a user visually inspecting and ticking a damage form of the parts;
FIG. 7 shows the core parts shown in Example 5 of the present invention, with a user visually inspecting and ticking a damage form of the parts;
FIG. 8 shows the core parts shown in Example 6 of the present invention, with a user visually inspecting and ticking a damage form of the parts;
FIG. 9 is a schematic diagram of a damage report preview page that can be deviation-corrected provided by Example 1 of the present invention;
FIG. 10 is a flow chart of the process of generating the first correspondence and the second correspondence in Step S140 of the method shown in FIG. 1 provided by an example of the present invention;
FIG. 11 is a structural schematic diagram of a vehicle accident loss assessment apparatus provided by another embodiment of the present invention; and
FIG. 12 is a structural block diagram of a computing device for a vehicle accident loss assessment processing according to an embodiment of the present invention.

### DETAILED DESCRIPTION

Detailed explanations and descriptions to the vehicle accident loss assessment method and apparatus provided by the present invention are made below in conjunction with the accompanying drawings of the specification.

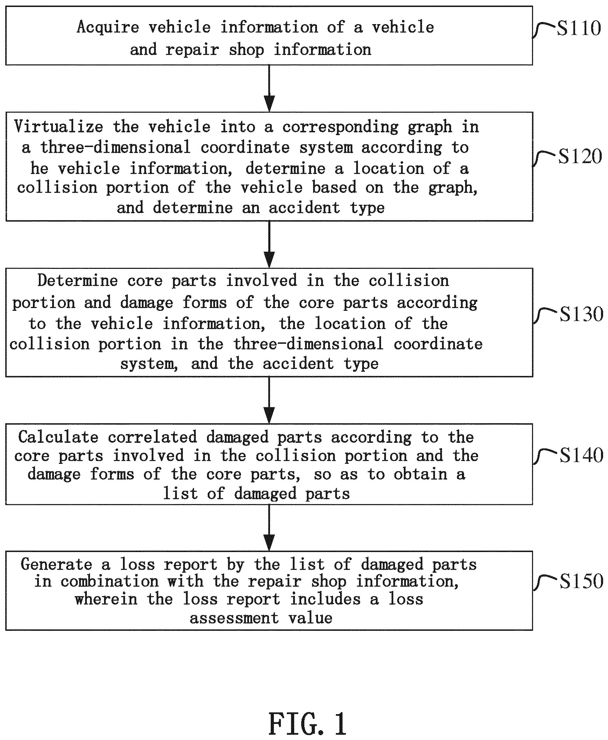

FIG. 1 is a flow chart of a vehicle accident loss assessment method provided by an embodiment of the present invention.

As shown in FIG. 1, in Step S110, vehicle information of a vehicle and repair shop information are acquired, wherein the vehicle information may include vehicle brand and configuration vehicle model information.

As an optional embodiment, the vehicle brand and configuration vehicle model information may be acquired by Optical Character Recognition (OCR) after a user enters a Vehicle Identification Number (VIN) image of a vehicle or by manually entering the Vehicle Identification Number information of a vehicle by a user. The repair shop information such as the name of the repair shop may be acquired. Since the repair prices of the same car parts may be different for different types of repair shops, the type of a repair shop can be judged according to the name of the repair shop.For example, the type of the repair shop may include a 4S shop and a comprehensive repair shop, so as to determine the repair prices of the parts according to the type of the repair shop. The vehicle information may also include license plate number information. When a loss report needs to be sent to an insurance company for claim use, the vehicle information needs to include the license plate number information, and the license plate number information can also be manually entered by the user. If the loss report does not need to be sent to the insurance company, and it is only for a personal inquiry, the license plate number information can also be left blank. As an alternative mode, a case identification code can also be entered or generated.

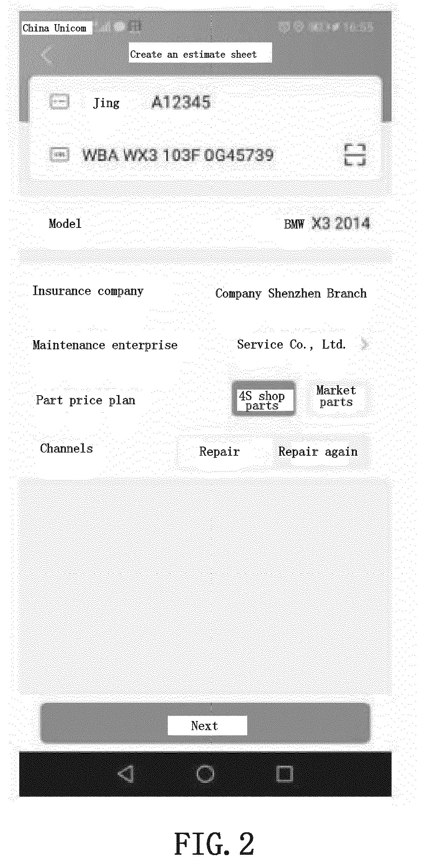

As a specific example, the basic information of a loss assessment vehicle can be generated through the process of creating an estimate sheet. The user can use a mobile device such as a cell phone to access the APP homepage or use a desktop computer to access the webpage homepage. After the license plate number information is entered, the Vehicle Identification Number information is acquired by OCR recognition after a user enters a Vehicle Identification Number (VIN) image of a vehicle or by manually entering the Vehicle Identification Number information of a vehicle. The vehicle model is determined according to the Vehicle Identification Number information, and then the repair shop information is selected and improved, thereby creating an estimate sheet. An example of the estimate sheet is shown in FIG. 2.

In Step S120, the vehicle is virtualized into a corresponding graph in a three-dimensional coordinate system according to the vehicle information, a location of a collision portion of the vehicle is determined based on the graph, and an accident type is determined.

The same type of car brand model can be virtualized into a cuboid with a corresponding size in a three-dimensional coordinate system. The user can draw a circle on the virtual cuboid to describe a collision portion of the vehicle and select an accident type.

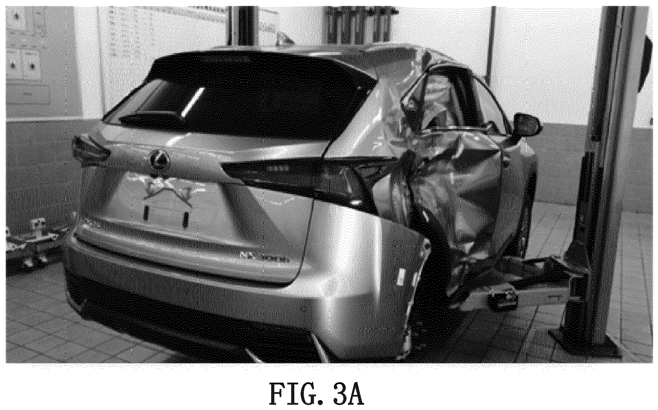

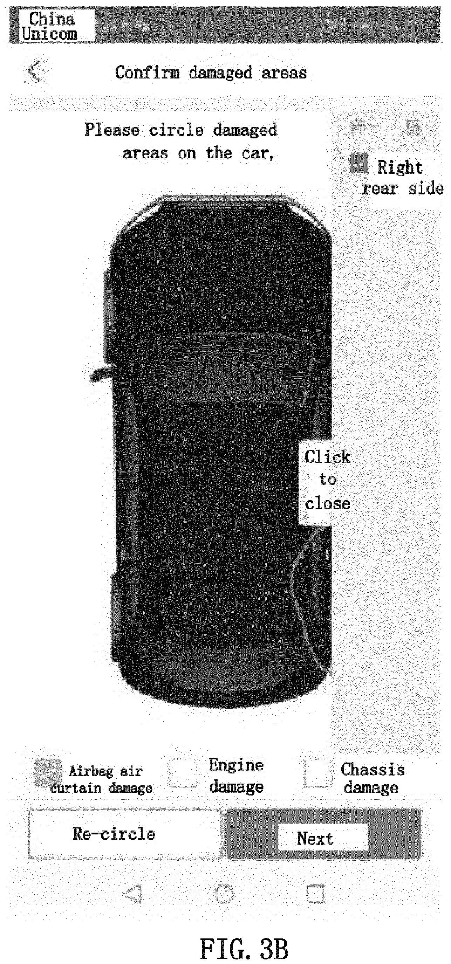

Example 1: taking the right rear side collision as an example, FIG. 3A is an actual vehicle collision diagram of Lexus SUV as provided by Example 1 of the present invention, and the right rear side of the vehicle is a collision damaged area. According to the circled description of the actual portion of the vehicle collision, the program intelligently calculates that the damaged area of the vehicle collision is the right rear side. As shown in FIG. 3B, the visual inspection shows that the airbag of the vehicle has exploded, and thus it is necessary to tick the accident type of "airbag air curtain damage".

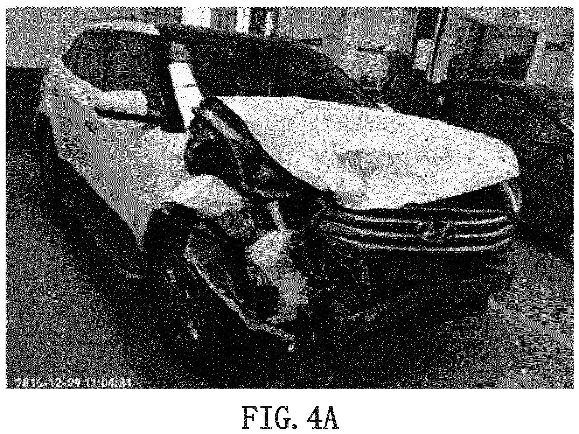

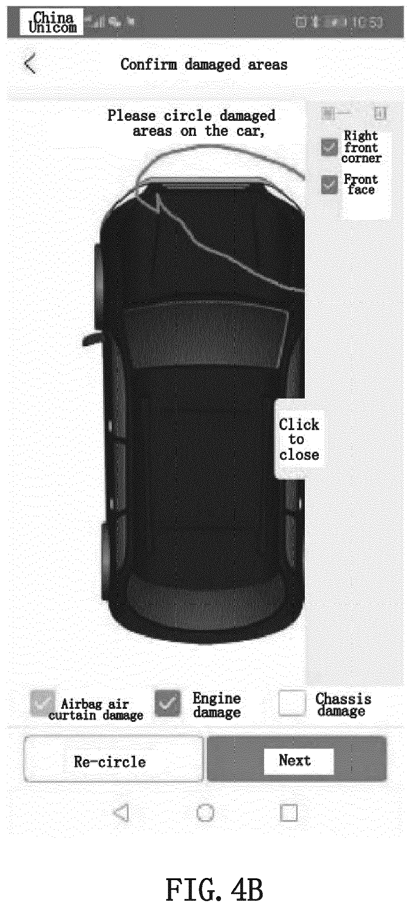

Example 2: FIG. 4A is an actual vehicle collision diagram of Beijing Hyundai SUV as provided by Example 2 of the present invention, and the right front corner and right side in the front of the vehicle are collision portions. According to the circled description of the actual portion of the vehicle collision, the program intelligently calculates that the damaged areas of the vehicle collision are the right front corner and the front face. As shown in FIG. 4B, the visual inspection shows that the airbag of the vehicle has exploded, and the engine intake manifold has been damaged, and thus it is necessary to tick the accident types of "airbag air curtain damage" and "engine damage".

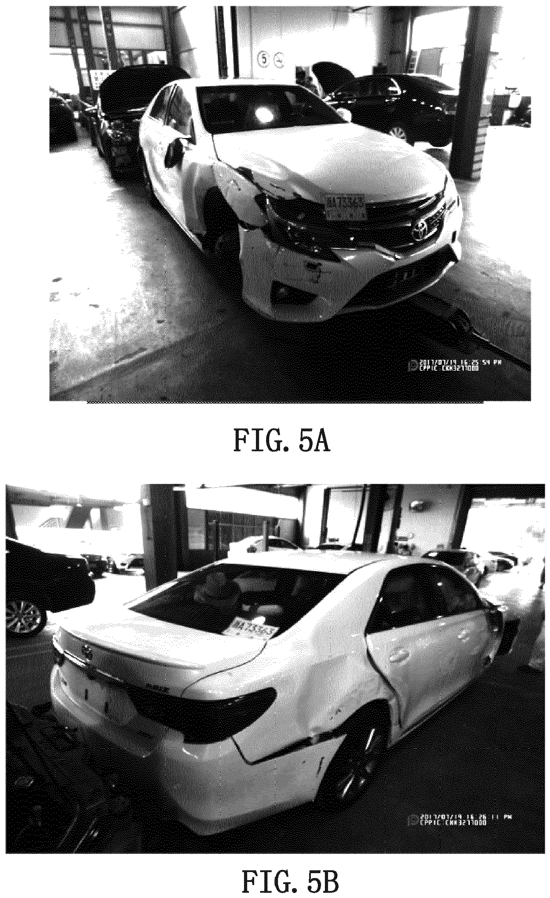

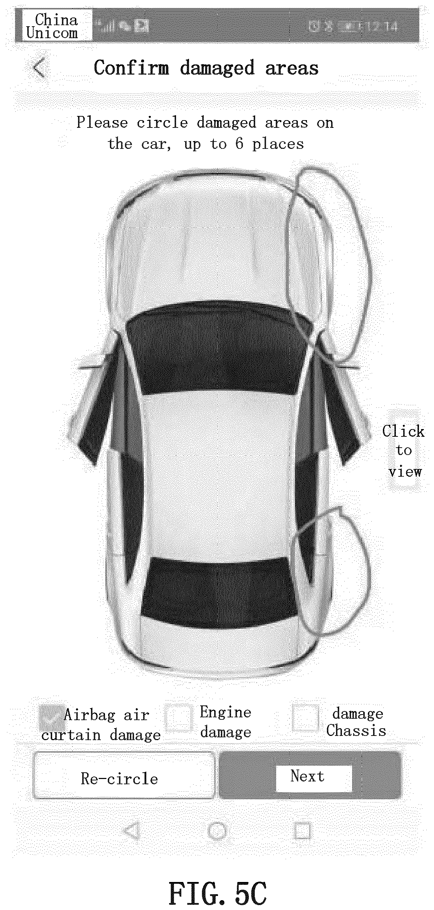

Example 3: FIG. 5A and FIG. 5B are actual vehicle collision diagrams of a three-box four-door vehicle of the FAW Toyota REIZ, as provided by Example 3 of the present invention, and the right front corner and right rear side of the vehicle are collision portions. According to the circled description of the actual portion of the vehicle collision, the program intelligently calculates that the damaged areas of the vehicle collision are the right front corner and the right rear side. As shown in FIG. 5C, the visual inspection shows that the airbag of the vehicle has exploded, and thus it is necessary to tick the accident type of "airbag air curtain damage".

In Step S130, core parts involved in the collision portion and the damage forms of the core parts are determined according to the vehicle information, the location of the collision portion in the three-dimensional coordinate system, and the accident type.

Among them, the core parts are characterized by "structural parts of the vehicle, or parts that act as collision buffers, or parts having the most active part correlation density in a certain accident type", for example "the front longitudinal beam assembly (left) is a structural part, which has the greatest collision bearing force; for example the front bumper frame is a part that act as a collision buffer; for example the front bumper skin has the most active part correlation density in the front, left front, and right front collisions". The core parts are distributed in the corresponding vehicle portions, and when a circle is drawn to describe the collision portion of the vehicle, the corresponding core part will pop up.

Specifically, the loading positions of car parts are first coordinated. Based on the actual loading position of the parts, a coordinate system of the loading parts is established, and a three-dimensional coordinate is given to the loading position of each part.

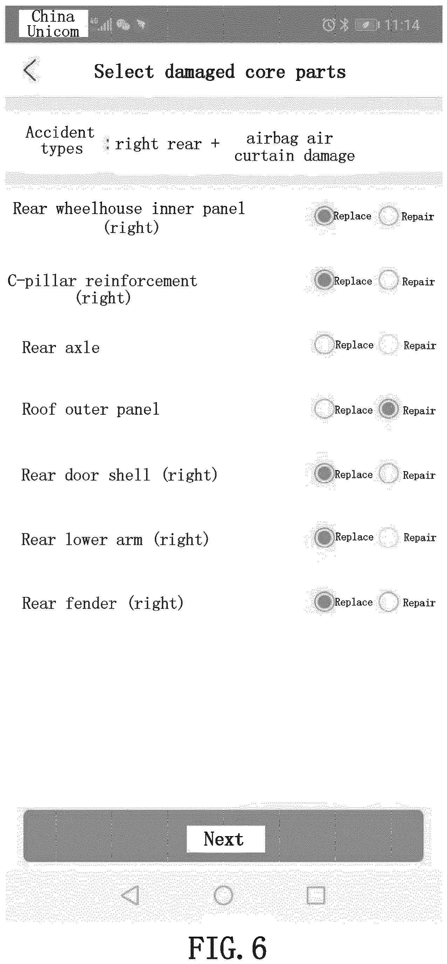

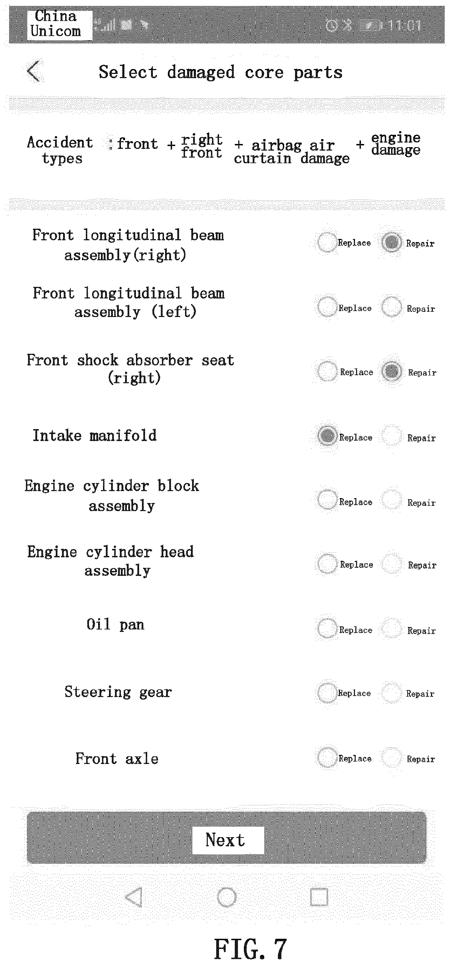

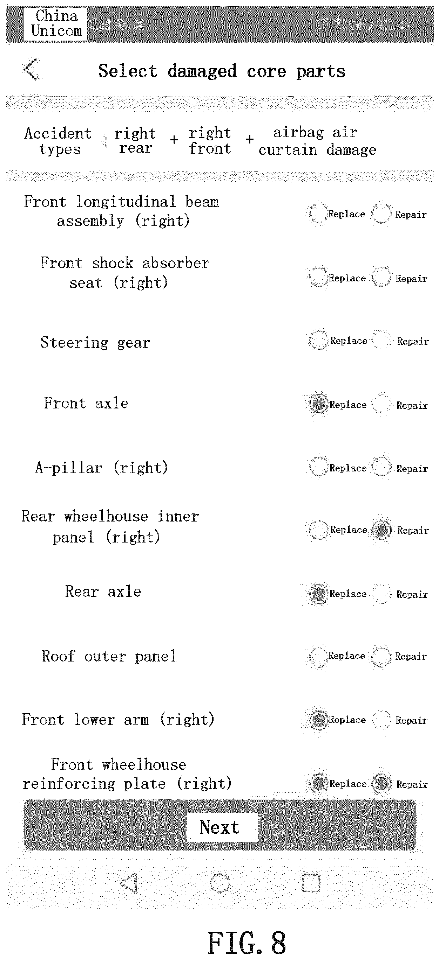

As a specific example, after the operation that the user circles and ticks the accident type, the program will pop up a corresponding list of core parts according to the actual loaded parts of the specific vehicle, and the user is required to judge the type of damage: whether to replace the damaged parts or repair them with sheet metal. Among them, the core parts can be parts with a damage form that can be seen or can be visually inspected on the appearance of the vehicle, or parts whose damaged form can be judged without being disassembled and inspected. The number of core parts can be between 3-12, and can vary depending on the number of vehicle collision portions and the vehicle configuration. FIG. 6 shows the core parts shown in Example 4 of the present invention, with a user visually inspecting and ticking a damage form of the parts. FIG. 7 shows the core parts shown in Example 5 of the present invention, with a user visually inspecting and ticking a damage form of the parts. Taking the front longitudinal beam assembly of the core part as an example, if the front longitudinal beam assembly of the vehicle is damaged, it indicates that the collision degree is serious; if the front longitudinal beam assembly of the vehicle is not damaged, it indicates that the damage degree is minor. FIG. 8 shows the core parts shown in Example 6 of the present invention, with a user visually inspecting and ticking a damage form of the parts.

In Step S140, correlated damaged parts are calculated according to the core parts involved in the collision portion and the damage forms of the core parts, so as to obtain a list of damaged parts.

Calculating correlated damaged parts in Step S140 may include the following steps: determining a collision damage type according to the core parts involved in the collision portion and the damage forms of the core parts; selecting a corresponding correlation density model according to a determined collision damage type; and calculating the correlated damaged parts by using the selected correlation density model. The names of all damaged parts obtained are collected, and the redundant parts are filtered out based on the actual accident vehicle loading parts to generate a list of damaged parts.

In Step S150, a loss report is generated by the list of damaged parts in combination with the repair shop information, wherein the loss report includes a loss assessment value.

Generating a loss report by the list of damaged parts in combination with the repair shop information in Step S150 may include the following steps: generating a preview loss report by the list of damaged parts in combination with the repair shop information; performing a deviation correction on a list of parts in the preview loss report; and generating the loss report according to the list of parts after the deviation correction in combination with the repair shop information, wherein the loss report includes the loss assessment value.

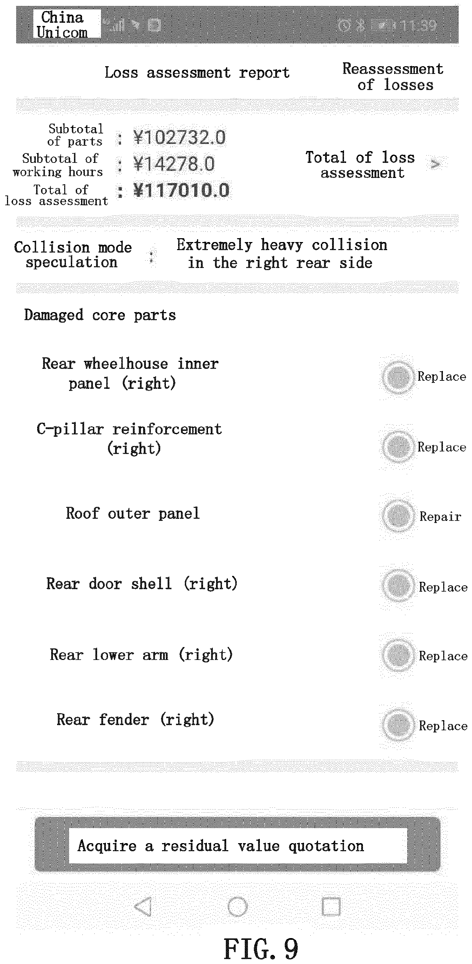

As a specific example, as shown in FIG. 9, the above Example 1 is still taken as an example. The user determines that 6 of the 10 core parts need to be replaced or repaired, and clicks on "Acquire Residual Value Quotation". The program intelligently calculates that the vehicle collision mode is "Extremely Heavy Collision on the Right Rear Side". The total cost of 76 part replacement items is RMB 102732 yuan, the cost of working hours item is RMB 14728 yuan, and the total of the loss assessment is RMB 117010 yuan. The actual loss of the car is RMB 109680 yuan, with a deviation of only RMB 7330 yuan and a deviation rate of 7.05%. Clicking on "View Details" can preview the specific loss assessment details.

The reason for the deviation is that there is an error in the damage form of "replace" or "repair" for a certain number of parts, and the user needs to perform a deviation correction again for an accurate and complete assessment. As an optional embodiment, the deviation correction can be performed by the user to delete and/or add the core parts in the list of damaged core parts in the preview loss report, and/or modify the damage forms of the core parts, and so on.

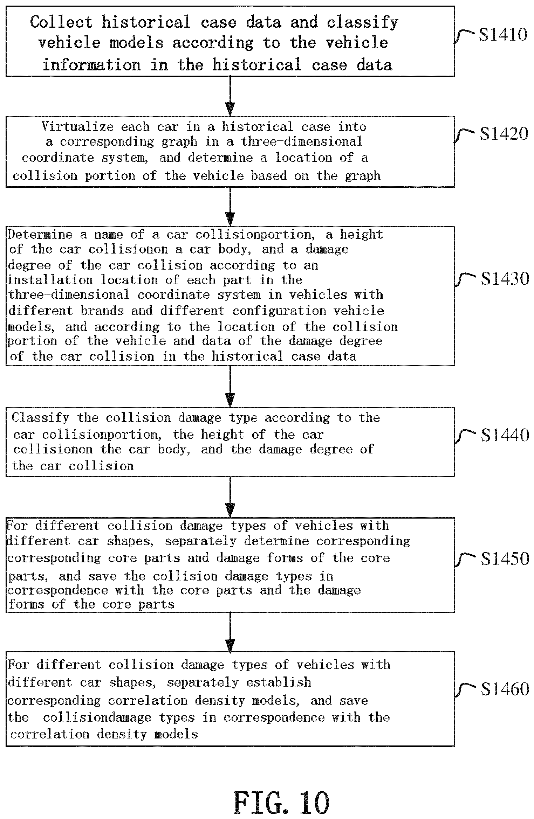

As an optional embodiment, in Step S140 above, the collision damage type may have a first correspondence with the core parts involved in the collision portion and the damage forms of the core parts, and the collision damage type may have a second correspondence with the correlation density model. As shown in FIG. 10, the generation process of the first correspondence and the second correspondence may include the following steps:
In Step S1410, historical case data are collected and vehicle models are classified according to the vehicle information in the historical case data.

The body shape of a passenger car may be mainly divided into six types: three-box four-door, three-box two-door, two-box five-door, SUV, MPV, and van. The specific shape form of each vehicle can be acquired by parsing the Vehicle Identification Number (VIN) of the vehicle.

In Step S1420, each car in a historical case is virtualized into a corresponding graph in a three-dimensional coordinate system, and a location of a collision portion of the vehicle is determined based on the graph.

Specifically, it is necessary to create three-dimensional coordinate data of the car collision portion and area in advance. As shown in FIG. 10, the appearance of the car body may be divided into 15 collision portions in total: front collision 1, left front corner collision 2, left front side collision 3, left middle side collision 4, left rear side collision 5, left rear corner collision 6, front rear collision 7, right rear corner collision 8, right rear side collision 9, right middle side collision 10, right front side collision 11, right front corner collision 12, front middle collision 13, mid-middle collision 14, and rear middle collision 15. The three-dimensional coordinate data is created for each collision portion area according to the form of a vehicle body. After the user draws a circle, the computer can calculate the name of the area corresponding to the vehicle collision.

In Step S1430, a name of a car collision portion, a height of the car collision on a carbody, and a damage degree of the car collision are determined according to an installation location of each part in the three-dimensional coordinate system in vehicles with different brands and different configuration vehicle models, and according to the location of the collision portion of the vehicle and data of the damage degree of the car collision in the historical case data.

Specifically, it is necessary to create three-dimensional coordinate gyroscope data for the installation locations of car parts in advance. In a car collision accident, the part names in the car part database, such as the TOP2000 part database, can cover 99.90% of car parts.

Which parts in the TOP2000 part database are actually installed in each vehicle can be acquired by parsing the Vehicle Identification Number (VIN) of the vehicle. In the TOP2000 part database, 80% of the parts are respectively installed in the same position among six body shapes of three-box four-door, three-box two-door, two-box five-door, SUV, MPV, and van, and the other 20% of the parts vary depending on the car brand and the configuration vehicle model.

The six body shapes can be divided into two categories, and two three-dimensional part coordinate systems are respectively established as follows:
A first part coordinate system: the part coordinate system for vehicles with body shapes other than the "three-box two doors" is OXYZ=0 (9,12,3), and the origin 0=(0,0,0) is the left front lower corner point of the vehicle; the X-axis represents the left and right direction of the vehicle, with a maximum scale of 12; the Y-axis represents the front and rear direction of the vehicle, with a maximum scale of 12; and the Z-axis represents the up and down direction of the vehicle, with a maximum scale of 3.

A second part coordinate system: the part coordinate system for a vehicle with a body shape of "three-box two doors" is OXYZ=0 (9,10,3), and the origin O=(0,0,0) is the left front lower corner point of the vehicle; the X-axis represents the left and right direction of the vehicle, with a maximum scale of 9; the Y-axis represents the front and rear direction of the vehicle, with a maximum scale of 10; and the Z-axis represents the up and down direction of the vehicle, with a maximum scale of 3.

As a specific example, more than 100 passenger car brands, over 200,000 different configuration vehicle models, and 2000 part names can be used to create three-dimensional coordinate gyroscope data of car part installation locations in a computer mode based on the actual part installation locations.

In Step S1440, the collision damage type is classified according to the car collision portion, the height of the car collision on the carbody, and the damage degree of the car collision.

As a specific example, 156 collision damage types can be created according to the car collision portion, the height of the car collision on the car body, and the damage degree of the car collision. As shown in Table 1 below, there are 10 collision damage types in the left front corner and 15 collision damage types in the left front side.

**Table 1**

| |
|---|
| Left front corner |
| Slight collision in the left front corner |
| Light collision in the left front corner |
| Moderate collision in the left front corner |
| Heavy collision in the left front corner |
| Extremely heavy collision in the left front corner |
| Slight collision in a high position of the left front corner |
| Light collision in a high position of the left front corner |
| Moderate collision in a high position of the left front corner |
| Heavy collision in a high position of the left front corner |
| Extremely heavy collision in a high position of the left front corner |
| Left front side |
| Slight collision in the left front side |
| Light collision in the left front side |
| Moderate collision in the left front side |
| Heavy collision in the left front side |
| Extremely heavy collision in the left front side |
| Slight collision in a high position of the left front side |
| Light collision in a high position of the left front side |
| Moderate collision in a high position of the left front side |
| Heavy collision in a high position of the left front side |
| Extremely heavy collision in a high position of the left front side |
| Slight collision in a low position of the left front side |
| Light collision in a low position of the left front side |
| Moderate collision in a low position of the left front side |
| Heavy collision in a low position of the left front side |
| Extremely heavy collision in a low position of the left front side |

As a specific example, the correspondence between the core parts and the part damage forms and the 156 collision damage types is obtained through a big data mining analysis method. In Step S1450, for different collision damage types of vehicles with different car shapes, the corresponding core parts and the damage forms of the core parts are separately determined, and the collision damage types are saved in correspondence with the core parts and the damage forms of the core parts.

Specifically, Step S1450 may include the following steps: taking a historical accident vehicle loss assessment record in the historical case data as sample data to perform a big data mining analysis, and classifying the sample data according to a loss amount; and analyzing a probability of various part damages occurring in various vehicle damage types involved in the sample data of different amount segments, so as to determine the corresponding core parts and the damage forms of the core parts.

As a specific example, the loss assessment records of the historical accident vehicles in tens millions level are specifically taken as samples. The big data mining analysis method is used to classify the samples according to loss amount segments, and analyze the probability of various part damages occurring in various vehicle damage types involved in the sample data of different amount segments, so as to determine the core key part names and part damage forms of 156 collision damage types. On the contrary, when the user circles and ticks the core part damage forms, the computer can intelligently calculate the damage type of the accident vehicle.

There is a strong correlation between the collision portion and the accident type of a vehicle and the list of key core parts, which can be obtained through the big data mining analysis method. In Step S1460, for different collision damage types of vehicles with different car shapes, the corresponding correlation density models are separately established, and the collision damage types are saved in correspondence with the correlation density models.

Specifically, Step S1460 may include the following steps: taking a historical accident vehicle loss assessment record in the historical case data as sample data to perform a big data mining analysis; and analyzing a probability of the damages occurring between parts, so as to generate the correlation density models. As a specific example, the loss assessment records of the historical accident vehicles in tens millions level are also taken as samples. The big data mining analysis method is used to analyze the correlation density between part damages. A neural density algorithm can be used to analyze the correlation density between part damages. For example, when a part A undergoes a replacement damage form, what is the density of a part B undergoing a replacement damage form. For another example, when both part A and part B undergo the replacement damage form, what is the density of a part C undergoing a replacement damage form. By analogy, the part damage forms that are strongly correlated to the parts in the TOP2000 part database are find out.

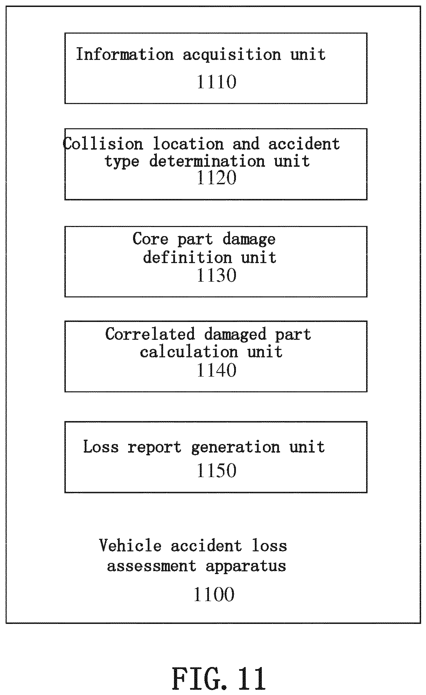

FIG. 11 is a structural schematic diagram of a vehicle accident loss assessment apparatus provided by another embodiment of the present invention. As shown in FIG. 11, the vehicle accident loss assessment apparatus 1100 provided by this embodiment includes an information acquisition unit 1110, a collision location and accident type determination unit 1120, a core part damage definition unit 1130, an correlated damaged part calculation unit 1140, and a loss report generation unit 1150.

The information acquisition unit 1110 is configured to acquire vehicle information of a vehicle and repair shop information. The operation of the information acquisition unit 1110 can refer to the operation of Step S110 described above with reference to FIG. 1.

The collision location and accident type determination unit 1120 is configured to virtualize the vehicle into a corresponding graph in a three-dimensional coordinate system according to the vehicle information, determine a location of a collision portion of the vehicle based on the graph, and determine an accident type. The operation of the collision location and accident type determination unit 1120 can refer to the operation of Step S120 described above with reference to FIG. 1.

The core part damage definition unit 1130 is configured to determine a core part involved in the collision portion and a damage form of the core part, according to the vehicle information, the location of the collision portion in the three-dimensional coordinate system, and the accident type. The operation of the core part damage definition unit 1130 can refer to the operation of Step S130 described above with reference to FIG. 1.

The correlated damaged part calculation unit 1140 is configured to calculate correlated damaged parts according to the core parts involved in the collision portion and the damage forms of the core parts, so as to obtain a list of damaged parts. The operation of the correlated damaged part calculation unit 1140 can refer to the operation of Step S140 described above with reference to FIG. 1.

The loss report generation unit 1150 is configured to generate a loss report by the list of damaged parts in combination with the repair shop information, wherein the loss report includes a loss assessment value. The operation of the loss report generation unit 1150 can refer to the operation of Step S150 described above with reference to FIG. 1.

The vehicle accident loss assessment method and apparatus provided by embodiments of the present invention are characterized by coordinating the car part loading position, virtualizing the same type of car brand models into a cuboid, and then establishing a coordinate system of the loading parts based on the actual loading position of the parts, and giving each part a three-dimensional coordinate of the loading position, and at the same time, mining and analyzing historical accident vehicle assessment records, and using a neural density algorithm to calculate the probability of damage occurring between vehicle parts and the correlation between the vehicle part damage and the damage degree of vehicle collision. The mathematical model of the relationship between the vehicle accident collision portion, the damage degree and the part damage is established, so as to quickly and intelligently evaluate the accident vehicle loss report. Artificial Intelligence (AI) is used to model the vehicle collision damage form, and a large amount of historical data are used for mining and analyzing, thereby realizing the correlation algorithm between the vehicle collision damage model and the loss detail, which can be conveniently operated and used by users at the mobile phone terminal and the webpage terminal, for quick assessment.

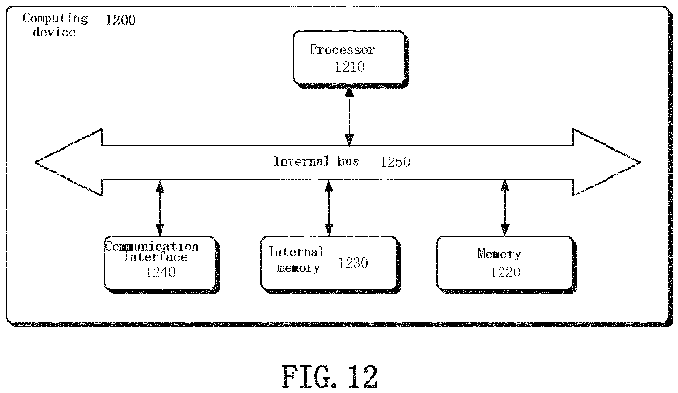

FIG. 12 is a structural block diagram of a computing device for a vehicle accident loss assessment processing according to an embodiment of the present invention.

As shown in FIG. 12, the computing device 1200 may include at least one processor 1210, a memory 1220, an internal memory 1230, a communication interface 1240, and an internal bus 1250, and the at least one processor 1210, the memory 1220, the internal memory 1230, and the communication interface 1240 are connected via the bus 1250. The at least one processor 1210 executes at least one computer-readable instruction (i.e., an element implemented in software form as described above) stored or encoded in a computer-readable storage medium (i.e., the memory 1220).

In one embodiment, the memory 1220 stores computer executable instructions which, when executed, cause the at least one processor 1210 to execute: acquiring vehicle information of a vehicle and repair shop information; virtualizing the vehicle into a corresponding graph in a three-dimensional coordinate system according to the vehicle information, determining a location of a collision portion of the vehicle based on the graph, and determining an accident type; determining a core part involved in the collision portion and a damage form of the core part according to the vehicle information, the location of the collision portion in the three-dimensional coordinate system, and the accident type; calculating correlated damaged parts according to the core part involved in the collision portion and the damage form of the core part, so as to obtain a list of damaged parts; and generating a loss report by the list of damaged parts in combination with the repair shop information, wherein the loss report includes a loss assessment value.

It should be understood that the computer executable instructions stored in the memory 1220, when executed, cause at least one processor 1210 to perform various operations and functions described above in conjunction with FIGS. 1-11 in various embodiments of the present invention.

In this disclosure, the computing device 1200 may include, but is not limited to: a personal computer, a server computer, a workstation, a desktop computer, a laptop computer, a notebook computer, a mobile computing device, a smartphone, a tablet, a cellular phone, a personal digital assistant (PDA), a handheld device, a messaging device, a wearable computing device, a consumer electronic device, and the like.

According to one embodiment, a program product such as a non-temporary machine-readable medium is provided. The non-temporary machine-readable medium may have instructions (i.e., the above elements implemented in software form) that, when executed by the machine, cause the machine to perform various operations and functions described above in conjunction with FIGS. 1-11 in various embodiments of the present disclosure.

Specifically, a system or device equipped with a readable storage medium can be provided, in which a software program code that realizes the functions of any of the above embodiments is stored, and the computer or processor of the system or device is caused to read and execute instructions stored in the readable storage medium.

In this case, the program code per se read from the readable medium can realize the functions of any of the above embodiments, and thus the machine readable code and the readable storage medium storing the machine readable code constitute a part of the present invention.

Embodiments of the readable storage medium include a floppy disk, a hard disk, a magneto-optical disk, an optical disk (such as CD-ROM, CD-R, CD-RW, DVD-ROM, DVD-RAM, DVD-RW, and DVD-RW), a magnetic tape, a non-volatile memory card, and ROM. Alternatively, the program code can be downloaded from the server computer or the cloud through the communication network.

The above described are only embodiments of the present invention and do not limit the protection scope of the claims of the present invention. Any equivalent structure or equivalent process transformation made by using the description and accompanying drawings of the present invention, or directly or indirectly applied to other related technical fields, are similarly included in the protection scope of the claims of the present invention.

## Claims

1. A vehicle accident loss assessment method, **characterized by** comprising:
acquiring vehicle information of a vehicle and repair shop information;
virtualizing the vehicle into a corresponding graph in a three-dimensional coordinate system according to the vehicle information, determining a location of a collision portion of the vehicle based on the graph, and determining an accident type;
determining core parts involved in the collision portion and damage forms of the core parts according to the vehicle information, the location of the collision portion in the three-dimensional coordinate system, and the accident type;
calculating correlated damaged parts according to the core parts involved in the collision portion and the damage forms of the core parts, so as to obtain a list of damaged parts; and
generating a loss report by the list of damaged parts in combination with the repair shop information, wherein the loss report comprises a loss assessment value.

2. The vehicle accident loss assessment method according to claim 1, **characterized in that** the vehicle information comprises vehicle brand and configuration vehicle model information.

3. The vehicle accident loss assessment method according to claim 1, **characterized in that** calculating correlated damaged parts comprises:
determining a collision damage type according to the core parts involved in the collision portion and the damage forms of the core parts;
selecting a corresponding correlation density model according to the determined collision damage type; and
calculating the correlated damaged parts by using the selected correlation density model.

4. The vehicle accident loss assessment method according to claim 3, **characterized in that** the collision damage type has a first correspondence with the core parts and the damage forms of the core parts, the collision damage type has a second correspondence with the correlation density model, and a generation process of the first correspondence and the second correspondence comprises:
collecting historical case data and classifying vehicle models according to the vehicle information in the historical case data;
virtualizing each car in a historical case into a corresponding graph in a three-dimensional coordinate system, and determining a location of a collision portion of the vehicle based on the graph;
determining a name of a car collision portion, a height of the car collision on a car body, and a damage degree of the car collision according to an installation location of each part in the three-dimensional coordinate system in vehicles with different brands and different configuration vehicle models, and according to the location of the collision portion of the vehicle and data of the damage degree of the car collision in the historical case data;
classifying the collision damage type according to the car collision portion, the height of the car collision on the carbody, and the damage degree of the car collision;
for different collision damage types of vehicles with different car shapes, separately determining corresponding core parts and damage forms of the core parts, and saving the collision damage types in correspondence with the core parts and the damage forms of the core parts; and
for different collision damage types of vehicles with different car shapes, separately establishing corresponding correlation density models, and saving the collision damage types in correspondence with the correlation density models.

5. The vehicle accident loss assessment method according to claim 4, **characterized in that**, for different collision damage types of vehicles with different car shapes, separately determining corresponding core parts and damage forms of the core parts, comprises:
taking a historical accident vehicle loss assessment record in the historical case data as sample data to perform a big data mining analysis, and classifying the sample data according to a loss amount; and
analyzing a probability of various part damages occurring in various vehicle damage types involved in the sample data of different amount segments, so as to determine the corresponding core parts and the damage forms of the core parts.

6. The vehicle accident loss assessment method according to claim 4, **characterized in that**, for different collision damage types of vehicles with different car shapes, separately establishing corresponding correlation density models, comprises:
taking a historical accident vehicle loss assessment record in the historical case data as sample data to perform a big data mining analysis; and
analyzing a probability of damages occurring between parts, so as to generate the correlation density models.

7. The vehicle accident loss assessment method according to claim 1, **characterized in that**, generating a loss report by the list of damaged parts in combination with the repair shop information, wherein the loss report comprises a loss assessment value, comprises:
generating a preview loss report by the list of damaged parts in combination with the repair shop information;
performing a deviation correction on a list of parts in the preview loss report; and
generating the loss report according to the list of parts after the deviation correction in combination with the repair shop information, wherein the loss report comprises the loss assessment value.

8. A vehicle accident loss assessment apparatus, **characterized by** comprising:
an information acquisition unit, configured to acquire vehicle information of a vehicle and repair shop information;
a collision location and accident type determination unit, configured to virtualize the vehicle into a corresponding graph in a three-dimensional coordinate system according to the vehicle information, determine a location of a collision portion of the vehicle based on the graph, and determine an accident type;
a core part damage definition unit, configured to determine a core parts involved in the collision portion and a damage forms of the core parts, according to the vehicle information, the location of the collision portion in the three-dimensional coordinate system, and the accident type;
an correlated damaged part calculation unit, configured to calculate correlated damaged parts according to the core parts involved in the collision portion and the damage forms of the core parts, so as to obtain a list of damaged parts; and
a loss report generation unit, configured to generate a loss report by the list of damaged parts in combination with the repair shop information, wherein the loss report comprises a loss assessment value.

9. A computing device, **characterized by** comprising:
one or more processors, and
a memory coupled to the one or more processors, the memory storing instructions that, when executed by the one or more processors, cause the one or more processors to perform the method according to any one of claims 1 to 7.

10. A machine-readable storage medium, **characterized in that** the machine-readable storage medium stores executable instructions that, when executed, cause the machine to perform the method according to any one of claims 1 to 7.
